# EUROPEAN PATENT APPLICATION

(11) **EP 0 996 080 A2**
(43) Date of publication of application: **26.04.2000**
(21) Application number: 99115495.6
(22) Date of filing: 05.08.1999
(51) Int. Cl.: G06K 9/20, H04N 1/04

(54) **System and method for automatic region selection**

(30) Priority: 08.10.1998 US 168809
(71) Applicant: Hewlett-Packard Company, Palo Alto, California 94304 (US)
(72) Inventor: Dawe, Julie T., Fort Collins, CO 80525 (US); Meyer, Gerald L., Fort Collins, CO 80525 (US)
(74) Representative: Schoppe, Fritz, Dipl.-Ing.

(57) **Abstract**

Automatic region selection logic (110) allows the automatic identification of regions of interest (152) within an image (150) to be scanned based upon the color (155, 157) of the region of interest (152). A user of a scanner (11) indicates a region (152), or regions, of interest on an image (150) to be scanned by highlighting (155, 157) the particular region of interest (152) using any device that imparts to the region of interest (152) a color that does not appear elsewhere on the image (150) to be scanned. The automatic region selection logic (110) recognizes the region of interest (152) by, for example, its saturation and hue values and presents the selected region (152) to the user through a display (19). Multiple region types may be indicated on the same document (150) by using different colors to distinguish between the different types of regions of interest.

## Description

### BACKGROUND OF THE INVENTION

### Field of the Invention

The present invention relates generally to electronic scanning devices, and, more particularly, to a system and method for automatically selecting a particular region of an image to be scanned in an electronic scanning device.

### Related Art

Scanning devices are useful in many applications where it is desirable to transfer an image from printed form into electronic form. Scanners capable of reading and converting a page into electronic format have been available for quite some time. Typically, a scanner will electronically read a page, classify the different types of images on the page and electronically store the information for later presentation and use. The types of classifications of a scanned page typically include text, photographs, drawings, charts, tables, business graphics, equations, handwriting, logos, *etc.* These different parts of a scanned image are typically classified into regions by a user after the scanner has scanned the page. Some scanners are capable of determining the classifications of particular regions of a scanned page in accordance with predetermined instructions.

For example, in a page including multiple text regions, some scanners will scan the page and will classify and store all the text information as a text region. Some users, however, would prefer not to have the entire document scanned and classified, but may instead be interested in only a portion of the document. In the above mentioned example, a user must place the document on the scanbed and interact with the scanner through an operation known as preview scan in order to choose the regions of interest for that particular user. Another option would be to have a scanner system in which an automatic analysis of the scanned page automatically detects and types the regions. Yet another option would be to predefine the regions of interest using a template or form. These options all have drawbacks, that make them undesirable for certain situations. For example, while automatic analysis of a scanned page might be useful for some instances, it is not always desirable and consumes a large amount of system resources. As another example, the use of an electronic template, or form, for predefining the regions, by its very nature, requires a known predefined structure of the scanned document. This makes it difficult to use in an ad hoc manner.

### SUMMARY OF THE INVENTION

The invention provides a system and method for automatic region selection in which a user of a scanner may, prior to placing the document on a scanner, determine the regions of interest that will be scanned. The invention allows a user of a scanner to choose which regions of a document a scanner will detect by, simply, surrounding the region of interest on a page using, for example, a common highlighter color marker, a ball-point pen, or even a crayon. Essentially, any way of distinguishing, using color, the region of interest from the surrounding undesired regions may be used with equal effectiveness. Although not limited to these particular applications, the system and method for automatic region selection are particularly suited for determining the typing of regions pertaining to scanned information. Other applications may include automatic region selection for documents from a digital database/file system or from other digital capture devices, such as video capture systems and digital cameras.

Architecturally, the present invention can be conceptualized as a system for automatically selecting a particular region of an image to be scanned comprising a scanner, a document analysis software component in communication with the scanner, and automatic region selection logic in communication with the document analysis software component.

In a preferred embodiment, the invention allows the user of a scanner to determine a region of a document to be scanned prior to scanning the document. A user may indicate the region of interest by, for example, using a highlighter, or other means of applying a distinguishing color to the region of interest on a document. The automatic region selection logic automatically recognizes the color difference between the region of interest and the rest of the image and can present only the region of interest indicated by the user on a display.

The present invention may also be conceptualized as providing a method for automatically selecting a region to be scanned, comprising the following steps. A user may, for example, surround a portion of an image to be scanned with a distinguishing color, *e.g*., using a highlighter. The user may then place the image to be scanned upon a scanner where document analysis software analyzes the image. The document analysis software, including the automatic region selection logic then detects the distinguishing color, and presents only that region of interest to the user.

The invention has numerous advantages, a few of which are delineated, hereafter, as merely examples.

An advantage of the invention is that it provides to a user the ability to indicate a particular region of interest of an image to be scanned, prior to the scanning of the image.

Another advantage of the invention is that it allows a scanner the ability to automatically distinguish, based upon color, a region of interest from an undesired region of an image.

Another advantage of the invention is that it allows the user to further modify the region, or regions, of interest after the region has been presented to the user.

Another advantage of the invention is that it allows multiple region types to be indicated and classified as regions of interest.

Another advantage of the invention is that it allows the use of inexpensive, commonly available highlighter markers or pens to indicate a particular region of interest on a document to be scanned.

Another advantage of the invention is in the user flow. The user procedure of marking on a document, or a transparency protecting the document, is less intimidating to the user than using scanning software to indicate regions of interest.

Another advantage of the invention is that indicating regions of interest prior to scanning is useful in batch processing situations.

Another advantage of the invention is that it is simple in design and easily implemented on a mass scale for commercial production.

Other features and advantages of the invention will become apparent to one with skill in the art upon examination of the following drawings and detailed description. These additional features and advantages are intended to be included herein within the scope of the present invention.

### BRIEF DESCRIPTION OF THE DRAWINGS

The present invention, as defined in the claims, can be better understood with reference to the following drawings. The components within the drawings are not necessarily to scale relative to each other, emphasis instead being placed upon clearly illustrating the principles of the present invention.
Fig. 1 is a schematic view of an exemplary scanner and computer system in which the automatic region selection logic of the present invention resides;
Fig. 2 is a schematic view illustrating the user interface and analysis code of Fig. 1 in which the logic of the present invention resides;
Fig. 3 is a flow diagram illustrating the operation of the automatic region selection logic of Figs. 1 and 2; and
Fig. 4 is a schematic view illustrating the results obtained through the operation of the automatic region selection logic of Figs. 1, 2 and 3.

### DETAILED DESCRIPTION OF THE PREFERRED EMBODIMENT

The automatic region selection logic of the present invention can be implemented in software, hardware, or a combination thereof. In a preferred embodiment, the automatic region selection logic is implemented in software that is stored in a memory and that is executed by a suitable microprocessor (uP) situated in a computing device. However, the automatic region selection software, which comprise an ordered listing of executable instructions for implementing logical functions, can be embodied in any computer-readable medium for use by or in connection with an instruction execution system, apparatus, or device, such as a computer-based system, processor-containing system, or other system that can fetch the instructions from the instruction execution system, apparatus, or device and execute the instructions.

In the context of this document, a "computer-readable medium" can be any means that can contain, store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium. More specific examples (a nonexhaustive list) of the computer-readable medium would include the following: an electrical connection (electronic) having one or more wires, a portable computer diskette (magnetic), a random access memory (RAM) (magnetic), a read-only memory (ROM) (magnetic), an erasable programmable read-only memory (EPROM or Flash memory) (magnetic), an optical fiber (optical), and a portable compact disc read-only memory (CDROM) (optical). Note that the computer-readable medium could even be paper or another suitable medium upon which the program is printed, as the program can be electronically captured, via for instance optical scanning of the paper or other medium, then compiled, interpreted or otherwise processed in a suitable manner if necessary, and then stored in a computer memory.

Moreover, while the automatic region selection logic will be illustrated hereafter with respect to the selection of text, the automatic region selection logic is useful for automatically recognizing any other attribute of a scanned image, for example but not limited to drawings, photographs, equations, graphics, lineart, *etc.*

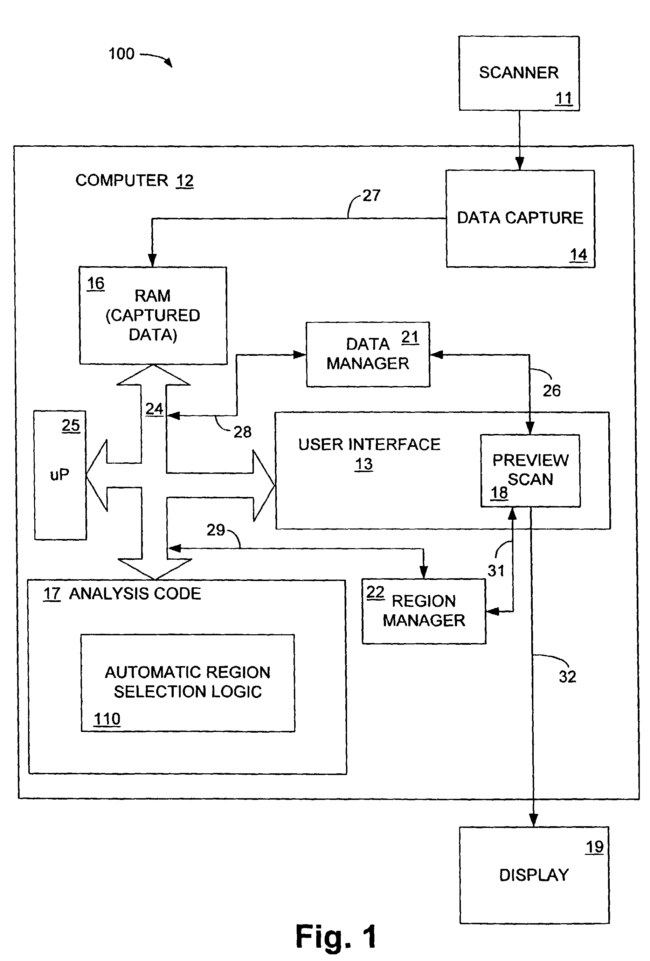

Turning now to Fig. 1, shown is a schematic view of a scanner and computer system 100 in which the automatic region selection logic 110 of the present invention resides.

Illustratively, scanner 11 scans a document placed therein in cooperation with computer 12. Computer 12 can be any general purpose computer that is capable of connecting to and executing the software that enables scanner 11 to function. Illustratively, computer 12 is a personal computer; however computer 12 may be any computer capable of communicating with scanner 11. A scanned image is captured by data capture block 14 located within computer 12. The scanned image data is illustratively stored in random access memory (RAM) 16. RAM 16 communicates with analysis code 17, user interface 13, and microprocessor (uP) 25 over bus 24.

Analysis code 17 is illustratively the logic that operates in conjunction with scanner 11 to determine the region types, locations and statistics of the scanned image that is stored as captured data in RAM 16. As stated above, region types may include text, photographs, equations, drawings, tables, business graphics, *etc*. Furthermore, analysis code 17 in conjunction with uP 25 is the underlying processing engine that maintains the scanned image data. Analysis code 17 also includes automatic region selection logic 110 of the present invention. Automatic region selection logic 110 resides within analysis code 17, which communicates with data manager 21 over bus 24 and connection 28. Data manager 21 communicates with bus 24 over connection 28 in order to access the data stored in RAM 16 in order to perform the preview scan operation or other post analysis tasks. The present invention is not reliant upon the preview scan operation. Indeed, the preview scan operation may be omitted in some applications, for example when batch processing. Post analysis tasks may include, for example, printing, faxing, optical character recognition, *etc.* Region manager 22 communicates with bus 24 over connection 29 in order to access information pertaining to the region clustering maintained within analysis code 17 in order to draw the scanned image on display 19 during the preview scan operation.

Automatic region selection logic 110 enables the analysis code 17 to recognize a portion of an image to be scanned in which a user has indicated a particular region, or regions, of interest. For example, a user might be interested only in scanning a particular paragraph of text on a page.

Illustratively, the user may indicate that region of interest by surrounding the paragraph in a border (known as a bounding box) having a color different than that of the rest of the image. For example, a user might use a commonly available highlighter pen or marker, a ball-point pen, or even a crayon to surround the particular region of interest, in this example a paragraph of text. As will be discussed in detail below, the automatic region selection logic 110 will recognize the particular region of interest and, if desired by a user, will present that region of interest to the user during the preview scan operation. In lieu of surrounding the entire paragraph of interest, a user may also use a highlighter to indicate a particular sentence, sentences, or other portion of the image to be scanned, as the region of interest.

Also included in computer 12 is user interface 13, which illustratively includes preview scan block 18. Preview scan 18 allows a user of a scanner to view the document to be scanned prior to final scanning, or otherwise, prior to sending the appropriate scanned data regions to downstream destinations (applications, storage, *etc*.). Preview scan 18 outputs the scanned image on connection 32 for output to a user on display 19.

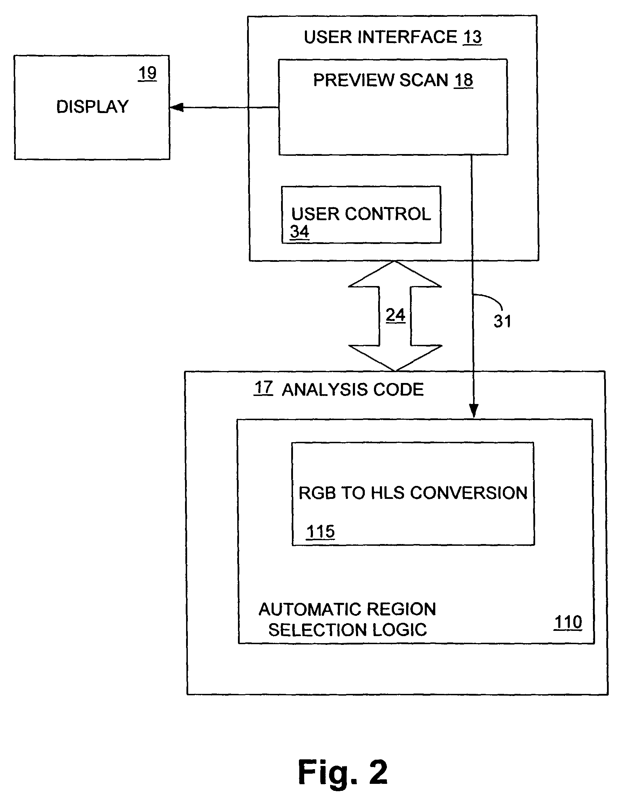

Fig. 2 is a schematic view illustrating the user interface 13 and analysis code 17 of Fig. 1, in which the automatic region selection logic 110 of the present invention resides. User interface 13 includes preview scan block 18 and user control 34. User control 34 may include any available means or method for interacting with the computer, and commonly includes a mouse, a stylus, or a computer keyboard. The function of user control 34 is to communicate the region of interest to analysis code 17 if the region of interest is not presented to the user as desired. As discussed above, in some applications such as batch processing, the preview scan operation, and any user interaction, may be omitted.

Automatic region selection logic 110 resides within analysis code 17 and contains the logic necessary to allow a scanner to recognize a region of interest indicated by a user. Automatic region selection logic 110 also includes RGB (red, green, blue) to HLS (hue, lightness, saturation,) conversion element 115. User interface 13 communicates with analysis code 17 over bus 24 and preview scan 18 communicates with automatic region selection logic 110 over connection 31.

In use, a user of a scanner will indicate a region of interest of an image by distinguishing the region of interest using color. This may be accomplished by, for example, using a commonly available highlighter marker to indicate the passages or paragraphs of a text image of interest to the user. Alternatively, the user may place the image to be scanned within a page protector, or transparent overlay, and indicate the region of interest through the overlay, thus preventing contamination of the original document.

Automatic region selection logic 110 will detect the highlighted region, or regions, by differentiating the color of the selected region. This could be accomplished in various ways, for example but not limited to the use of RGB to HLS conversion element 115. RGB to HLS conversion element 115 comprises logic that converts each pixel from an RGB value to an HLS value. Any pixel having color will have a relatively high saturation value, the higher the saturation value the higher the probability that color is present. In addition, hue can also be analyzed, with hue being used to distinguish among different colors. Automatic region selection logic 110 then considers the saturation value as an indication of the region of interest. Automatic region selection logic 110 differentiates between areas of saturation (color-this is an area of interest) and areas having little or no saturation (ignore these areas). If an area of saturation encloses an area of no saturation then the area having saturation is probably a bounding box (used to enclose a region of interest) and is recognized as an area of interest.

An area of interest need not be surrounded inside a bounding box to be recognized by the automatic region selection logic 110. For example, a portion of text that is itself highlighted would also appear as having saturation and would be considered by the automatic region selection logic 110 as being a region of interest. In this manner, the region of interest is recognized by the automatic region selection logic 110 by its having color. Specifically, the color highlighter used by the user to indicate the region of interest prior to scanning the original document allows the automatic region selection logic 110 to differentiate between an undesired region and a region of interest.

Furthermore, once an area of high saturation, and thus a region of interest, is discovered, hues can be analyzed to distinguish between different colors. For example, a red hue may have a value different than that of a blue hue. In this manner, different hues could be used to indicate different types of regions, for example, text, photograph, lineart, tables, *etc.* It should be noted that RGB to HLS conversion is merely one way in which to determine whether color is present in an image. For example, the hue, saturation, value (HSV) color space may be used to determine color, or it is possible to analyze directly the RGB values. Other ways to determine a colored area include color spaces where there are lightness, red/green and yellow/blue axes, such as L*a*b* or L*u*v*. With spaces such as these, one would look for either one or both the red/green (a*,u*) or yellow/blue (b*,v*) parameters to be significantly different than zero or neutral. In addition, numerous other color spaces would work, as would other saturation and hue color spaces as those skilled in the art will appreciate.

To illustrate one possible manner in which the automatic region selection logic 110 may distinguish color on a page, consider using RGB to HLS conversion. In this example we assume that a commonly available green fluorescent highlighter pen is used to indicate a particular region of interest. The well known RGB to HLS conversion algorithm is as follows:

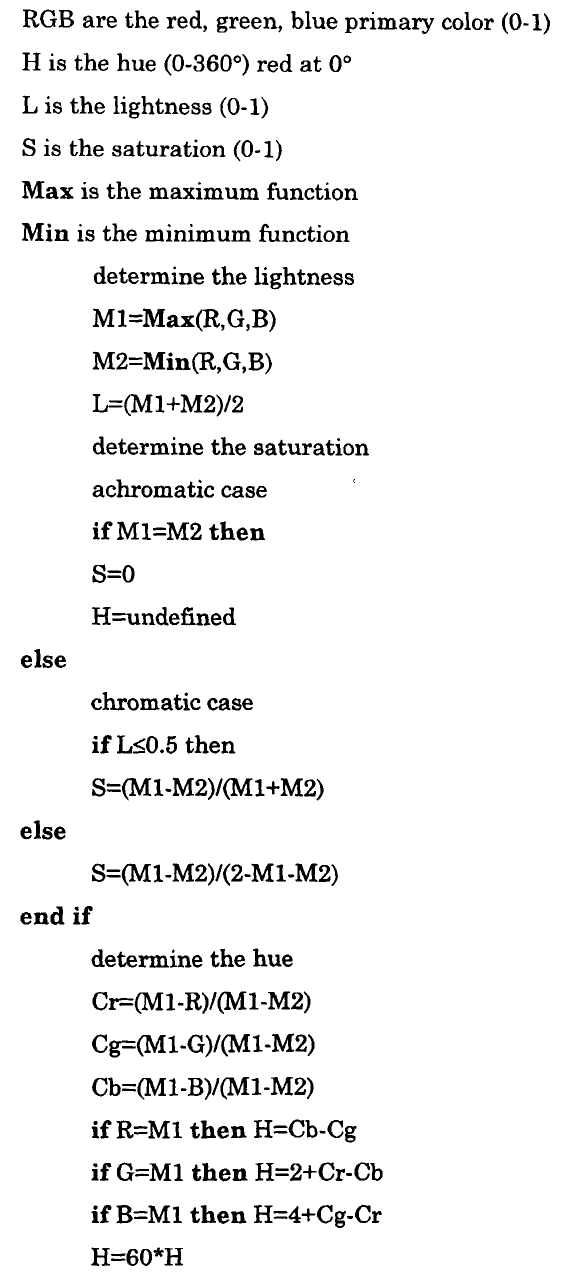

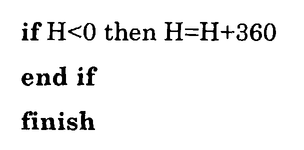

Using a green highlighter as an example, the system first converts the 0-255 red, green, blue values to a value between 0 and 1 by dividing by 255. The red, green and blue values can be determined by scanning the green highlighter and analyzing the color of a randomly selected pixel using, for example, the Photoshop (registered trademark of Adobe Systems Incorporated) image editing software package. For simplicity, the following calculations have been rounded to four decimal places.
R=152 ⇒ 152/255=.5961.
G=225 ⇒ 225/255=.8824
B=0 ⇒ 0/255=0.
M1=.8824 and M2=0
L=.8824/2=.4412, is the lightness value.
Since M1≠M2 it is chromatic.
L≤0.5, therefore
S=(.8824-0)/(.8824+0)=1⇒ S=1 so fully saturated, therefore color. This indicates that the automatic region selection logic 110 has determined an area of color, therefore indicating a region of interest. Now the hue may be analyzed to determine which color has been identified as follows.
Cr=(.8824-.5961)/(.8824-0)=.3245
Cg=(.8824-.8824)/(.8824-0)=0
Cb=(.8824-0)/(.8824-0)=1
where C indicates color.
Green = M1, therefore,
H=2+Cr-Cb
H=2+.3245-1
H=1.3245
H=60*H
H=79.47°
Looking at the HLS double hexcone color model as those skilled in the art will appreciate, 79.47° falls between green and yellow, somewhat closer to yellow. This indicates that this pixel represents a color pixel of yellowy green hue. To the human eye the color is more green than yellow, however, the automatic region selection logic 110 perceives it as more yellow. In this manner the automatic region selection logic 110 can determine a region of interest depending upon the presence of color and further, can distinguish among various colors.

If the user desires, preview scan 18 then displays the automatically selected regions of interest on display 19. Once the document is viewed on display 19 during the preview scan operation 18, the user has an opportunity to confirm that the automatic region selection logic has correctly interpreted the region, or regions, of interest. If the region of interest is not as the user desires, the user may alter the regions through the use of user control 34. Once satisfied with the selected and displayed regions, the user may continue with post analysis processing such as faxing, printing, optical character recognition, as those skilled in the art will appreciate.

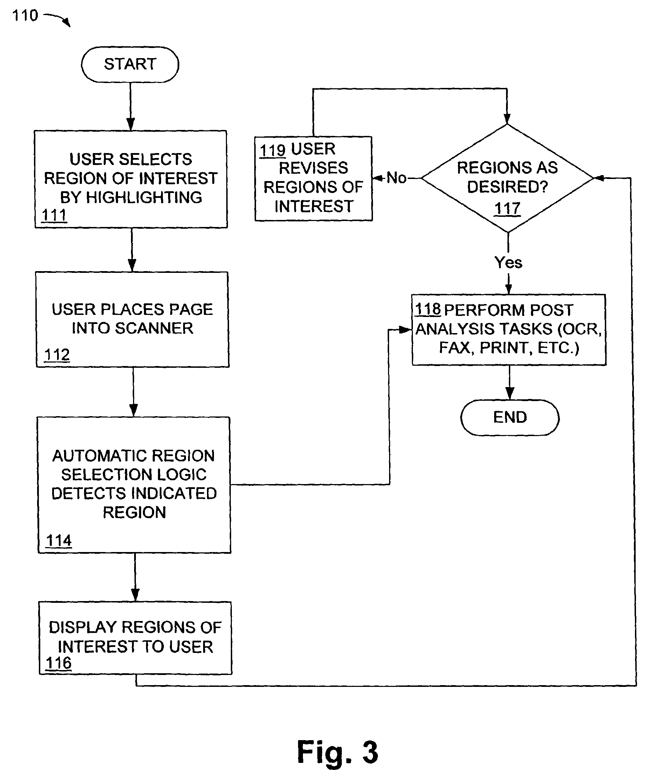

Fig. 3 is a flow diagram illustrating the operation of the automatic region selection logic 110 of Figs. 1 and 2. In block 111 a user may select a region, or regions, of interest of an image to be scanned by, for example, highlighting the particular region of interest, or by surrounding the region of interest in a bounding box of an appropriate color that is recognizable by the automatic region selection logic 110. Alternatively, the user may place the image to be scanned within a transparent protective enclosure and indicate the region of interest on the transparent enclosure.

In block 112 the user places the document to be scanned into the scanner 19.

In block 114, automatic region selection logic 110 operates to detect the region, or regions, of interest by recognizing and interpreting the color of the indicated region of interest in accordance with that described above. Different region types may be indicated by the user to be of interest by using a different color to indicate each different region type. In this manner, the automatic region selection logic will analyze the saturation value, or any color indicator depending upon the color space used, to determine whether a particular region has been identified as a region of interest. Automatic region selection logic 110 will also analyze the hue value to differentiate between different region types, each region type being indicated by a particular color. Once the automatic region selection logic 110 determines the regions of interest and if no further interaction is required (*i.e*., in a batch processing mode) then post analysis tasks such as optical character recognition, faxing printing, *etc.*, are performed in block 118.

If the user wishes to view the regions of interest interpreted by automatic region selection logic 110, then in block 116 the regions of interest as interpreted by automatic region selection logic 110 are displayed to the user on display 19 (Fig. 2). In block 117 it is determined whether the regions as presented to the user by preview scan 18 (Fig. 2) are as desired.

If the regions presented are not as desired by the user, then in block 119 by using user control 34 (Fig. 2) a user may manipulate the regions using analysis code 17 (Fig. 2) so that the regions of interest are as desired by the user. Typically, the user would use a mouse to select the regions of interest during the preview scan operation (18 of Fig. 2). Once the regions are as desired, post analysis processing tasks 118, such as optical character recognition, faxing printing, *etc.*, are performed.

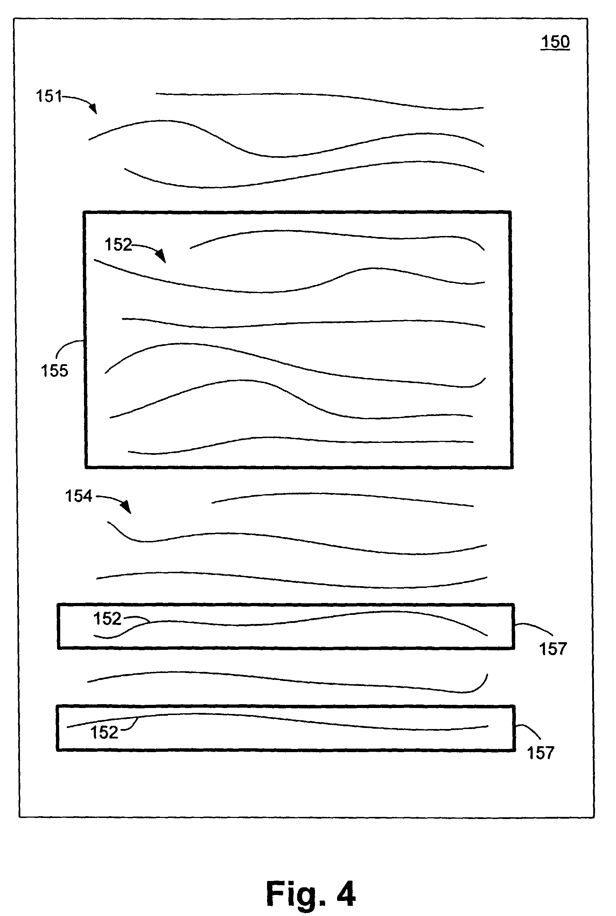

Fig. 4 is a schematic view illustrating the results obtained through the operation of the automatic region selection logic 110 of Figs. 1, 2 and 3. Fig. 4 illustrates a representative page 150 to be scanned. Page 150 illustratively includes text 151. In this example, text is used to illustrate the results obtained though the operation of the automatic region selection logic 110, however, different types of regions, *e.g*., lineart, photographs, drawings, graphics, *etc.*, may be automatically selected though the use of the present invention. Furthermore, multiple regions on the same document may be differentiated by assigning different colors to different region types. For example, text regions may be identified by using a first color, while graphic regions may be identified using a second color.

Bounding box 155 surrounds text region of interest 152. Bounding box 155 is illustratively formed by using a color marker, such as a highlighter pen, to surround text 152. When scanned, bounding box 155 is interpreted by automatic region selection logic 110 (Figs. 1 and 2) as a region of interest. This occurs because bounding box 155 is of a different color, and therefore has a different saturation value, than that of the rest of page 150. In this manner, a user has indicated to the automatic region selection logic 110 that text 152 is the region of interest. Automatic region selection logic 110 then analyzes page 150, looking for areas of saturation and no saturation. When an area of saturation is identified, *i.e.*, bounding box 155 enclosing an area having no saturation, it is interpreted as being a region of interest and is presented to the user as such. Conversely, text 154 is recognized as an area having little, or no saturation and automatic region selection logic 110 will not display text 154.

Alternatively, a user may indicate a region, or regions, of interest by highlighting only a sentence or word of text. Illustratively, highlighted regions 157 indicate that text portions 152 are also regions of interest. In this mode, instead of recognizing bounding box 155, the automatic region selection logic 110 recognized highlighted areas 157. Illustratively, any area on page 150 having color will be identified by automatic region selection logic 110 as being a region of interest, and will be presented to the user as such. Analyzed in conjunction with saturation is the hue of each region of interest. Different hue values can be used to distinguish among colors such that different colors can be used to indicate different region types on the same document. For example, a user may use a yellow highlighter to indicate text as a region of interest and may use a blue highlighter to indicate a drawing as another region of interest. When analyzed for saturation, both yellow and blue regions will have a saturation value of sufficient intensity for the automatic region selection logic 110 to determine that they are both regions of interest. Both yellow and blue regions may now be analyzed in hue to determine which color is highlighting text and which color is highlighting a drawing. In this manner it is possible to not only determine a region, or regions of interest on a document, but also to distinguish between different region types on the same document. Furthermore, while bounding box 155 is illustrated as being rectangular in shape, any shape may be used to identify a particular region of interest

It will be obvious to those skilled in the art that many modifications and variations may be made to the preferred embodiments of the present invention, as set forth above, without departing substantially from the principles of the present invention. For example, the system and method for automatic region selection can be implemented using various scanning and computing products and can be implemented to distinguish between multiple region types in the same image. Furthermore, the system and method for automatic region selection can be implemented using any method of differentiating between areas having and lacking color. All such modifications and variations are intended to be included herein within the scope of the present invention, as defined in the claims that follow.

## Claims

1. A system (100) for automatically selecting a particular region (152) of an image to be scanned, comprising:
a scanner (11);
a document analysis software component (17) in communication with said scanner (11); and
automatic region selection logic (110) in communication with said document analysis software component (17), said automatic region selection logic (110) configured to detect a variation in color in a scanned image.

2. The system (100) as defined in claim 1, wherein said scanned image is comprised of a plurality of pixels, each pixel having a raster value (red, green, blue (RGB)), and wherein said automatic region selection logic (110) further comprises logic (115) configured to convert each said pixel from an RGB value to an HLS (hue, lightness, saturation) value.

3. The system (100) as defined in claim 1, wherein said automatic region selection logic (110) detects a selected region (152) defined by an area bounded (155, 157) by a defined color.

4. The system (100) as defined in claim 2, wherein said automatic region selection logic (110) detects a variation in saturation of a scanned image (155, 157).

5. The system (100) as defined in claim 2, wherein said automatic region selection logic (110) detects a variation in hue of a scanned image (155, 157).

6. A method for automatically selecting a region (152) to be scanned, comprising the steps of:
surrounding (155, 157), with a distinguishing color (155, 157), a portion (152) of an image (150) to be scanned;
analyzing said image (150) using a document analysis software component (17); and
detecting, using said document analysis component (17), said distinguishing color (155, 157).

7. The method as defined in claim 6, wherein said step of detecting further comprising the step of converting (115) said portion of said image to be scanned from an RGB (red, green, blue) value to an HLS (hue, lightness, saturation) value.

8. The method as defined in claim 7, wherein said saturation value is used to differentiate said portion (152) of said image (150) to be scanned.

9. The method as defined in claim 7, wherein said hue value is used to differentiate said portion (152) of said image (150) to be scanned.
